# EUROPEAN PATENT SPECIFICATION

(11) **EP 3 119 957 B1**
(45) Date of publication and mention of the grant of the patent: **13.05.2020**
(21) Application number: 14885970.5
(22) Date of filing: 25.07.2014
(51) Int. Cl.: E04D 1/20, E04D 1/30, H02S 20/25, E04D 1/28

(54) **LIGHT WEIGHT MOLDED ROOF TILE WITH INTEGRATED SOLAR CAPABILITIES**
LEICHTGEWICHTIGER GEGOSSENER DACHZIEGEL MIT INTEGRIERTER SOLARKAPAZITÄT
TUILE DE TOIT LÉGÈRE MOULÉE À CAPACITÉS SOLAIRES INTÉGRÉES

(30) Priority: 21.03.2014 US 201414222057
(43) Date of publication of application: 25.01.2017
(73) Proprietor: Bellavia, Carmen, Pittsburg, PA 15237 (US)
(72) Inventor: Bellavia, Carmen, Pittsburg, PA 15237 (US)
(74) Representative: Tomkinson, Alexandra
(86) International application number: PCT/US2014/048111
(87) International publication number: WO 2015/142379

(56) References cited:
- US-A- 3 971 184
- US-A- 4 396 665
- US-A- 5 837 363
- US-A1- 2009 004 399
- US-A1- 2010 239 815
- US-A1- 2010 239 815
- US-A1- 2012 272 592
- US-A1- 2012 272 592

## Description

### BACKGROUND OF THE INVENTION

### Field of the invention

This invention relates generally to building exterior roof tiles and specifically to an improved building roof tile that is made of a uniquely fire resistant or retardant layered system, featherweight, hurricane proof, yields a high R-value for insulation, offers low thermal transference into attic space, is able to be retrofitted to any sloped roof without structural buildup, is molded into single or triple sized units, can produce upgradable solar energy, is easy to transport and install, cannot break under foot or when extreme pressures are applied and can be molded to look like slate, wood, flat or roll tile. The tile embodiment is made of closed cell polymeric isocyanate component and water based HCFC-2455fa blown in 1.36Kg (31b) or greater formulations or other fibrous materials.

### Description of the prior art

Exterior sloped building roofs have used different materials such as asphalt-based products, metal, clay, cement, wood, slate, and rubber, for protecting a building from inclement weather such as rain, ultraviolet rays, heat, cold, snow, ice, and wind damage.

Typical roofs are made of plywood, tarpaper and shingles. Tiles are also used to cover the plywood and tarpaper. Traditional tiles are made in small pieces and are made of terra cotta, clay or other heavy, cementious materials. Traditional tiles create a great weight on the building structure requiring a more sturdy and costly construction of the building. Installing traditional tile is material and labor-intensive and requires hauling and lifting heavy loads of tile pieces and concrete for the setup work and throughout the installation and finishing process. Workers must cut traditional tiles with dangerous diamond blades powered by gasoline driven tools causing hazardous airborne particles to lungs and eyes.

The present invention defined in the claims overcomes several compounding problems of previously used tiles made of cement and ceramic materials by providing a dense 1.36Kg (3-lb) or 1.81Kg (4-lb) closed cell, featherweight poly foam-based, molded tile that is durable, has exceptional high wind resistance (over 225-mph), has excellent R- value for insulation so the invention does not retain and transfer heat or cold to the undersides of the roof deck or better termed "attic space", is far easier to cut with a hand saw and less expensive to install on a building's exterior slope or pitched roof deck.

Traditional concrete and terra cotta roof tiles are easily fractured and broken from the moment the tiles are de-molded until the time the tile installation is completed. Broken tiles are an expense that is passed on to the end user. Average breakage ranges between 5-10% each time tiles are loaded, transported and unloaded. Pallets of tile are all subject to this moving process no less than twice after manufacturing, yielding high waste and higher prices. The invention will solve this problem by formulating "roof tiles" according to the claims out of polyurethane foam, mineral fiber or fiberglass, sturdy, completed and ready for palletizing immediately after de-molding, without the possibility of fracture thereby eliminating breakage due to its core composition coupled with distinguishing design characteristics.

Traditional tiles are subject to deterioration due to the composition of the products and the effect of the elements over time. This degradation causes tiles to become brittle and routinely fracture and break when basic maintenance is performed causing leaky puncture points in the substrate. The invention solves this problem by proposing a tile according to the claims and incorporating a thick-bodied, heavy-duty wedge design that brings the foundation or bottom side of the tile to rest onto the substrate/roof deck creating a wholly supported platform when installed using adhesive foam therefore, roof tiles will not/cannot, break under foot but has 1/17 the weight of traditional tiles (volume-to-volume), yet will not crack/break during usual shipping, handling and installation due to its durable closed cell, poly-blend foam or mineral fibrous core and its long-lasting, impact resistant flexible poly top coating.

Polyurethane based foams are the most insulating roofing systems available today. These products cure in seconds and are currently used only on flat roofs. Because of application limitations from on-site spray procedures, polyurethane based foams are unacceptable on pitched roofs because they cannot be satisfactorily finished, once cured. Also the flammability ratings of standard coatings or top layering for urethane flat roof systems that are applied after spray foam applications, are not approved for usage on a roof pitch over 2" on 12" i.e. "low slope". Poly coatings or plastics and polyurethane foams or other mineral fibrous materials can include additives allowing these byproducts to be labeled as fire resistant or retardant, which simply defined means said byproducts are not impervious to flame but rather when encountered by high temperatures caused by fire or other high heat circumstances, their additives react from the heat lending the byproducts to respond in one of two ways by either charring into an ash-like resin or turning from a solid state back into a hot liquid state before gravity disperses it. However when fire resistant or retardant poly coatings and fire resistant or retardant poly foams are applied to each other and introduced to a flame, the emissions released in both byproducts create a highly volatile discharge negating any/all fire resistant or retardant properties. This problem has never been rectified and has plagued industries for decades.

Applicant's tile resolves the fire resistance and fire retardance problems by manufacturing the foam tile using a multi-layering manufacturing process applying specific coating materials over the tile body polyurethane foams or other mineral fibrous materials. The invention as defined in the claims introduces a fire blocking partition between the tile exterior/outer coating and the polyurethane foam tile body, but only a non-water based layer is applicable or else necessary bonding cannot occur. Under production, open tile mold cavities initially are robotically sprayed with a flexible byproduct mixture of an 100% solid aliphatic polyurea material, Ultra Violet ray repellents and flame retardant/resistant additives yielding a durable top tile layer/surface coat that sets to tack in under one-minute. Secondly a rigid byproduct intumescent mixture based on a non-halogenated phosphate yielding a unique 100% solid epoxy sub-layer/beneath surface coat that serves as the fire blocking partition is introduced and is also robotically sprayed on the outer aliphatic layer and allowed to fully cure before closing the mold and injecting the tile body polyurethane foam or mineral fibrous material, permitting all in-mold products to simultaneously bond, thereby creating the first authentic fire resistant foam roof tile. Once the tile is removed from the mold, it is ready to be delivered and installed on any 3" on 12" or greater slope roof. The tile can also be correctly manufactured if the process were conducted in reverse.

Direct sunlight on hot days raises roof material temperatures well over 200 degrees and cool nights rapidly decrease roof material temperatures below 80 degrees. During these weather conditions, on the underside of the tile, condensation daily drips down onto the substrate causing rapid substrate deterioration. Therefore tile roof systems need frequent maintenance and often leak after a short service time due to constant moisture. The Applicant's tile solves this problem by the product's high thermal insulating core that eliminates thermal transfer from the top to the bottom side of the roof tile yielding a much greater lifecycle to the substrate due to the fact that the Applicant's tile temperature only yields minor fluctuations on its exposed surface area. If the temperature outdoors is 29.4°C (85 degrees Fahrenheit), then the surface area of the Applicant's tile core will represent substantially that intensity even in direct sunlight, thereby virtually eliminating contrary temperature elevations and their transference to the undersides of the roof or better termed "attic space" preventing unbearable conditions just above the living or working space of a residential or commercial property.

Available tile roof systems need frequent maintenance and leak after a short service time due to rain/water penetration between roofing tiles that flows down onto the substrate also causing rapid substrate deterioration. The Applicant's tile solves this problem by the product's multi-casting pieces into (3-in-1) increased area per tile or triple/tri-tiles that reduce side lapping by over 60% on the roof lay-outs and by overlapping the tiles in a manner that inter band in a building block fashion which makes water penetration much more difficult if not mostly impossible.

Available pitched roof systems cannot hold up against category five (cat-5) hurricane winds. The Applicant's tile solves this problem by testing and achieving over a 200+ mph wind uplift rating without suffering any damage. This rating demonstrates that the invention can withstand any hurricane force wind and protect the structure it is properly installed on gready minimizing storm damage and insurance claims plus premiums.

Hailstorms can damage most roof systems and sometimes facilitates major water penetration into the building and massive damage to building's interior. The Applicant's tile roof solves that problem because of each tile's pliable/crack resistant top layer and sub-layer coatings, plus the thickness and density of the Applicant's tile's core. When a tile is struck, even if hard enough to dent the tile, tile will not permit water penetration. Applicant's tiles can be easily repaired or replaced individually if damaged.

Traditional tile roof systems are highly material and labor intensive. The Applicant's invention as claimed solves these problems because the roof tiles are extremely lightweight. Roof tile installation is not complex, and requires far lesser amounts (+ 35%) of poly foam adhesive and caulking to install. The need for additional mechanical roof tile fasteners that create leaking points due to nail or screw penetrations into/through the substrate beyond the bottom/start row on any structure's sloped roof is eliminated when tile needs applied on steep slope roofing areas.

Solar panels are attached to roofs to generate electricity. Solar panel brackets are attached to metal legs or stands that penetrate roof systems thus requiring special flashings and patching points. Solar panels create additional weight on structures plus their brackets, metal framing and bases, require separate installation, add no insulation, and create potential drafting and leak points in a roof surface. A typical solar panel uses a series of photovoltaic cells permanendy mounted together that cannot be upgraded or renewed to meet significant improvements in solar cells without replacing entire panels. The Applicant's roof solves these issues by recessing/embedded solar photovoltaic cells encapsulated within a durable tile-sized "Module" eliminating leaky metal brackets, and heavy metal framing and bases. Individual tiles and/or their individual "Modules" are easy to upgrade. Simply detach "Modules" using common fastening methods (screws or supplied stock), unplug and sporadically replace a few "Modules" in the future, thereby making solar energy generating roof tiles very easy and affordable to boost power with tomorrow's advancements and eliminate the need to ever consider replacing costly large solar panels on a rooftop.

Solar panels installed on brackets that are attached to metal legs or stands, require removing said panels to replace the roofing material every 15-30 years (depending on the type of roof system) and then separately reinstalled again, creating a variety of potential problems from panel breakage, to additional labor costs, to incorrect electrical and/or securing mechanical fastenings. The Applicant's roof solves these issues by greatly increasing the roof tiles' life expectancy (70+ years) and recessing /embedded solar cells encapsulated within a durable "Module" that is easily replaced by substituting the solar module back into the roof tile with simple fasteners, thus eliminating the need to remove and replace any large solar panels due to dissimilar roofing material degradation or a solar cell's accelerated short term life span. Simply replace the "Module" set in the tile without disturbing the tile or roof substrate.

Solar panels that are the interlocking, surface mounted type (installed without brackets and metal legs) are mechanically fastened directly to the roof deck and double as the main barrier between the weather and the structure. Pre-existing rooftops must be exactly the same size in length and width as the installed combination of these types of solar panels or they must be interwoven with other roofing material types to protect balance roof areas not covered by the panels. Inter mixing different roofing materials creates potential drafting and leak points in a roof surface. The invention solves these issues by perfectly retrofitting any sloped roof deck end to end (like traditional roof tiles) without the need for solar panel bracket or additional structural build-out and extra engineering costs due to invention's featherweight core and easy installation advantages. The total installed weight of the invention per square foot with any desired substrate, equals the same or less installed weight as any regular or heavy duty asphalt shingle that are universally approved for usage on every pitched roof over a 3-on-12 slope.

US2012/0272592 discloses a roof tile made of polymeric isocyanate component and water base HCFC-2455fa, with an aliphatic top layer and a flame retardant aromatic sublayer. A dome shaped recess is provided on a bottom surface of the tile to allow adhesive to be provided in the same. This known tile embodies the preamble of claims 1 and 6.

### SUMMARY OF THE INVENTION

According to a first aspect of the present invention there is provided a roof tile according to claim 1.

According to a second aspect of the present invention there is provided a light weight roof tile according to claim 6.

An absolutely fire resistant array of highly insulated, pre-molded featherweight poly foam tiles for a sloped roof configured to fit together to complete a building exterior roof covering that is aesthetically similar to a traditional tile roof, withstands any hurricane force winds, yields high R-values, offers low thermal conduction through tiles into an attic space and retrofits onto any sloped roof without structural build-up. The individual tiles can be molded into single area or triple area units. Each tile does not break under foot or when extreme downward compression forces are applied. The tiles can be factory molded to look like slate, wood, flat, roll tile or some other style if design needs to match historic tile types. In an alternate embodiment, certain tiles will include easily removable and upgradable solar photovoltaic cell "Module" that will produce solar energy. The tiles are lightweight and therefore easy to transport and install.

Each molded tile is configured for placement at a predetermined location on the roof structure such as the roof peak or top, the start/first row of tiles along the bottom row of the roof and the field tiles, which are tiles that are installed between the roof peak and the bottom row of tiles. The hip and ridge tiles are installed at the roof's peak and the rake tiles are installed at the roof's side/gable ends.

The tiles of the present invention are molded from poly foam or comparable material from which each of the tile pieces are made in separate molds In all embodiments of the invention, the tile comprises a tile body constructed of polyurethane foam. There is a different mold for the field tiles, a different mold for the start row tiles, a different mold for the solar tiles, a different mold for the hip or ridge tiles, and a different mold for the rake tiles. All of the tile pieces for the roof are uniquely manufactured and can be manipulated to appear like any roof product desired.

In one embodiment the composition of the tile that is molded uses a complementary system of polymeric isocyanate "A"-component and a composite water-based (HCFC-2455 fa) blown "B "-component. Using these ingredients, the mixture produces a tile that has lightweight and excellent thermal insulation characteristics. Other compositions for specific roof applications involve modifications to the polyurethane A and B mix as well as mineral fiber and fiberglass cores. Additives for mold control are examples of modifications. Each tile can also include a finish coat that may include gel coat and similar additives. Each tile includes an outer layer coating for wear plus UV protection and a sub-layer coating to create a fire blocking partition on a polyurethane foam tile that can be safely used on a sloping roof as explained below.

Applicant's tile solves the fire resistance and fire retardants problems using a multi- layering manufacturing process that applies two separate layers of different specific materials over the tile body polyurethane foams The two separate layers create on the tile body a fire blocking partition between the poly outer/surface coating and the polyurethane foam tile body, but only a non-water based layer is applicable or else necessary bonding cannot occur. Under production, open tile mold cavities initially are robotically sprayed with a flexible byproduct mixture of an 100% solid aliphatic polyurea material, Ultra Violet radiation repellents and flame retardant/resistant additives yielding a durable outer layer/surface coat that sets to tack in under one-minute. Secondly an intumescent mixture based on a non- halogenated phosphate yielding a unique 100% solid epoxy sub-layer/beneath surface coat that serves as the fire blocking partition is also robotically sprayed onto the cured aliphatic material layer in the mold and allowed to fully cure before closing the mold and injecting the polyurethane foam that forms the tile body, permitting all in-mold products to simultaneously bond, thereby creating the first authentic fire resistant and retardant foam roof tile. Once the tile is removed from the mold, it is ready to be delivered and installed on any 3" on 12" or greater slope roof. The tile can also be correctly manufactured if the process were in reverse. For example, the foam tile body is molded and removed from the mold. The inner intumescent layer mixture based on a non-halo-generated phosphate is applied to a roof tile as a coating except on the bottom recess portion of the tile. Once the inner coating has set, the outer coating is applied over the inner layer. The outer coating includes aliphatic poly materials and ultraviolet ray repellents creating an outer layer on the tile which is also not sprayed on the tile bottom recess as explained below.

All of the tile pieces for the roof are pre-molded with outer layer and sub-layer coatings before being delivered to a distributor or building site where the tile pieces are attached to the roof as described herein.

As an example, a commercial or residential building may have a wooden frame with a plywood sheet roof. A substrate may be prepared and applied to the roof deck with a hot or cold asphalt cap sheet or peal-n-stick with granular type material or any other type of suitable substrate to which the tiles will be attached for high wind areas. Once a substrate has been installed and cured, customary poly foam adhesive (different than the tile composition) is used to attach all tiles to the substrate.

Both the field and start row tiles have on their back sides recessed or domed areas having grooves that are of a predetermined pattern that accesses the tiles' polyurethane foam core. The molded roof tile having a substantially flat bottom surface that rests into full contact with roof slope, said bottom surface including a recessed area of a predetermined shape that includes poly adhesive receiving grooves/channels that increase adhesive area by 23%, said recessed area not having any layers of fire blocking materials and not having a layer of fire resistant UV blocking material thereby exposing the core body composition of the roof tile for engagement with standard poly adhesive used to attach the roof tile to the roof substrate. These recessed areas utilize approximately 35% less poly foam adhesive that is applied to the roof substrate than traditional tiles. The tile core from production will be temporarily exposed (without top or sub layer coatings) at the tile underside only within the recessed, single dome/depression like area until adhesive foam is added and exposed area is set facing down against substrate by a roof installer, thereby establishing 100% foam filled core with full foam to adhesive foam contact for maximum holding/bonding power.

Individual foam roof tiles are manually placed on the roof substrate and are allowed to have the poly foam adhesive harden firmly, thereby attaching the closed cell foam roof tiles to the poly foam adhesive and to the roof substrate. The roof tiles are installed on the roof in semi conventional fashion due to the fact that start and field tiles are available in triple area sizes, something traditional tiles could never offer due to conventional tiles extreme weight and easy fracture/breakage during shipping and installation even if outfitted with wire mesh during the manufacturing process.

Triple area sized tiles or tri-tiles expedite installation for installers saving time and money while adding overall weight to the tripled area tile for better bonding, The start tile is installed at the bottom roof edge and offers a lip or butt that aligns and overlays the bottom edge for moisture run-off without moisture reaching the roof's edge, averting certain water damage over long periods of time. Tri-field (three times wider than a single tile) and single field tiles attached in horizontal rows, are then overlapped row by row from roof bottom to roof peak. Rake tiles are installed at the start row's and field row's end and serve more as ornamental in nature. At the very peaks of the roof, the hip or ridge tiles are adhered to the roof using poly foam adhesive. Note that the field tiles and the bottom row tiles have top and bottom plus side- overlapped segments that inter band in a building block fashion for straight, mistake free application. The tiles are staggered to provide brick like format from row to row for efficient moisture run-off.

There is a rigid metal "Z" bar, which is mechanically fastened at the top edge of a completed bottom row of start tile to prevent vertical tile slippage so other tiles (called field tiles) installed above the bottom row can be immediately installed without worry of downward tile displacement/compromises prior to full curing of tile adhesive bond to tile and to substrate

It is an aim of this invention to provide an improved molded roof tile made of a specific polyurethane foam (preferably product types approved by Miami Dade Code Compliance Center) that is featherweight, can withstand category five hurricanes, yield a high R- value for insulation, offer low thermal conduction into an attic space, retrofits any sloped roof without structural build-up, can be molded into single or triple area units, cannot break under foot or when extreme pressures are applied, can include removable/replaceable solar "Modules" that produce electricity, is easy to install and can be molded to look like slate, wood, flat roll tile or some other style if design needs to match historic tile types.

An extremely important aim of the invention is to provide a polyurethane foam roof tile having a fire blocking barrier that allows the polyurethane foam roof tile to be safely used on a sloping roof.

### BRIEF DESCRIPTION OF THE DRAWINGS

Figure 1 shows a top perspective view of the tri-field tile used in the present invention.
Figure 2 shows a top perspective view of the tri-solar module tile used in the present invention.
Figure 3 shows a bottom perspective view of the tri-field and tri-solar module tile used in the present invention.
Figure 4 shows a top perspective view of the tri-start tile used in the present invention.
Figure 5 shows a bottom perspective view of the tri-start tile used in the present invention.
Figure 6 shows a top perspective view of the single field tile used in the present invention.
Figure 7 shows a bottom perspective view of the single field tile used in the present invention.
Figure 8 shows a top perspective view of the hip and ridge tile that can be used with a roof tile of the present invention.
Figure 9 shows a bottom perspective view of the hip and ridge tile in figure 8.
Figure 10 shows a top perspective view of the rake tile used on the far edges/gable ends that can be used with a roof tile of the present invention.
Figure 11 shows a bottom perspective view of the rake tile used on the far edges/gable ends in Figure 10.
Figure 12 shows a top perspective view of a hollow tile container or Junction-Box Tile (JT) in the present invention.
Figure 13 shows a bottom perspective view of a hollow tile container or Junction-Box Tile (JT) in the present invention.
Figure 14 shows a top perspective view of a solar "Module" that can be used with the tiles of the present invention.
Figure 15 shows an exploded perspective view of a solar "Module" that can be used with the tiles of the present invention.
Figure 16 shows a top perspective view of a "Z" bar tile support that can be used with a roof tile of the present invention.
Figure 17 shows a perspective view in cross-section of the foam tile body and fire retardant inner and outer layers not covered by the present invention.
Figure 18 shows a perspective view of an array of tiles on a sloping roof in accordance with the invention.
Figure 19 A shows a schematic side elevational view of an array of roof tiles according to the invention mounted on a roof. Figure 19B shows an enlarged cutaway view of the lower edge of the roof shown in Figure 19 A. Figure 19 C shows an enlarged cutaway view of a portion of the roof shown in Figure 19 A. Figure 19 D shows and an enlarged cutaway view of the roof peak of the roof shown in Figure 19 A.

### PREFERRED EMBODIMENT OF THE INVENTION

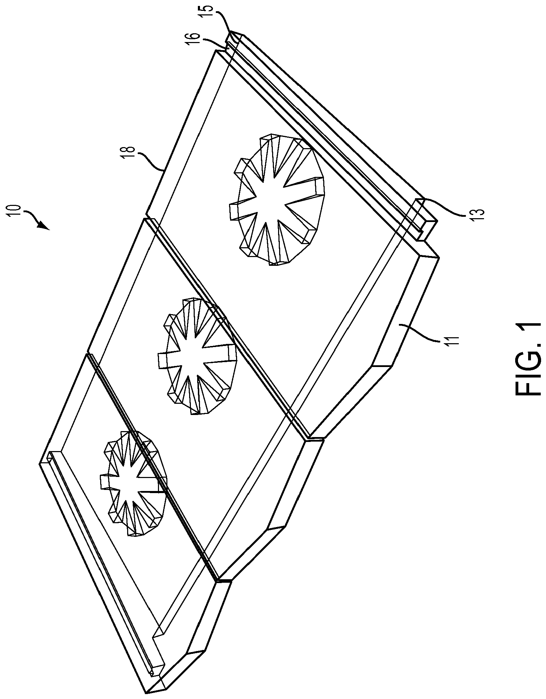

Referring now to the drawings and in particular Figure 1, a molded tri-field tile 10 is shown from a polyurethane material preferably polymeric isocyanate and a water-based (HCFC- 2455fa) blown component.

The tile 10 has an outer layer of a 100% solid aliphatic polyurea material, and in addition ultraviolet ray protectors. The tile 10 also has a second inner layer or sub-layer that is a unique 100% solid intumescent mixture based on a non-halogenated phosphate creating a solid epoxy sub-layer. The inner layer provides a fire blocking barrier to protect the polyurethane foam body of the tile from fire. The entire exterior surface of the tile 10 is not covered with the fire retardant and blocking fire layers. The tile rear surface which includes a recessed portion explained below does not receive the fire retardant and fire blocking outer and inner layers coatings.

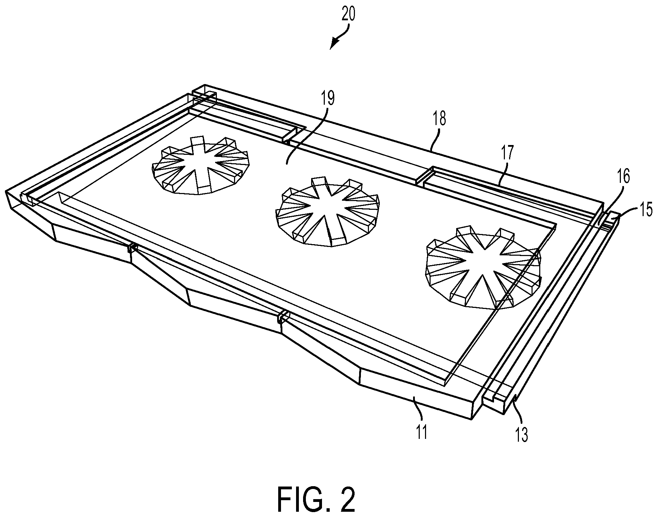

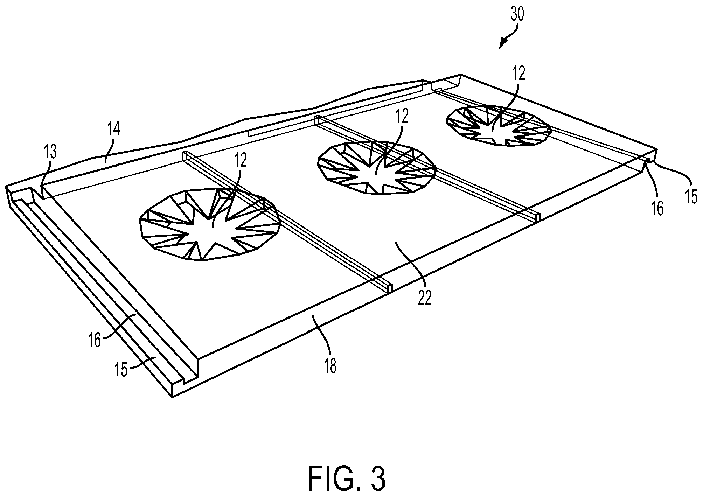

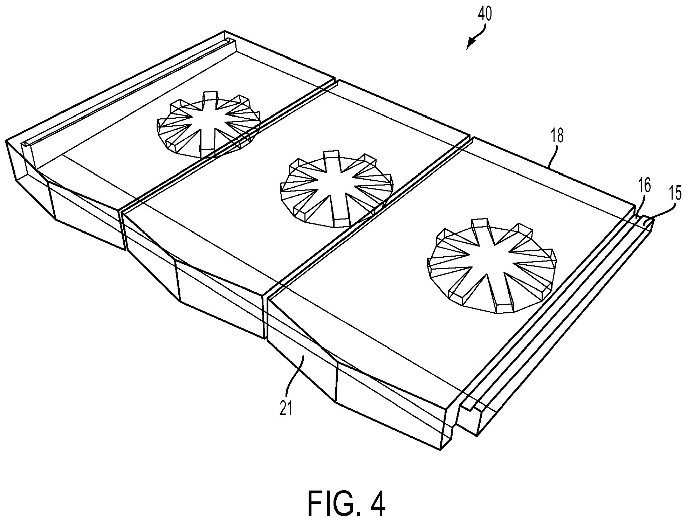

The length of the tri-field tile 10 is three times longer than a single tile. The tri-field tile 10 includes a side edge return portion 15 that is used to create a gutter-like system for each field tile with an adjacent tile having a reversed portion 16 so that adjacent tiles inter band in a side-by-side row building block fashion. The tile top end 18 is flat and butts against a wedged portion 13 shown in Figure 3. The tile bottom face portion 11 shown in Figures 1 and 2 is the topside edge of the top-over-bottom overlap and positioned in brick-like fashion regarding tiles 10, and direcdy above tile 40 shown in Figure 4 shown within.

An alternate embodiment such as molded tri-solar module field tile is shown in Figure 2. Tile 20 is molded from a polyurethane material preferably polymeric isocyanate and a water-based (HCFC-2455fa) blown component. The a tri-solar tile 20 includes a large recessed flat surface 19 for receiving removable solar "Module" (not shown) and smaller recessed areas 17 for tri-solar tile to tri-solar tiles' electric cable connectivity. Tri-solar tiles 20 like tri-field tiles have reversed portions 15 and 16 as well as flat edge 18, bottom edges 11 and 13.

Tile 30 shown in Figure 3 represents the underside perspective of the tiles shown in Figures 1 and Figure 2 show as they would appear after molding from a polyurethane material preferably polymeric isocyanate and a water-based (HCFC-2455fa) blown component. Both the tri-field tile 10 and the tri-solar tile 20 rear surfaces shown in tile 30 includes three dome like recessed areas 12 with grooves expanding outwardly considerably increasing surface contact areas 12 that are sufficiendy deep to receive foam adhesive (not shown), that is used to firmly attach tiles 10 and 20 to a roof substrate. The tile 30 inside core will be temporarily exposed at the tile underside only within the recessed, single dome/depression like area 12 until adhesive foam is added by a roof installer, thereby establishing 100% foam filled core area with full foam to adhesive foam contact for maximum holding/bonding power.

Also shown in Figure 3 a lower step-like portion 14 which is used to overlap the tile below the tile shown in Figure 1 when a roof is done. Tile 30 as shown also has same reversed portions 15 and 16 plus edges 11, 13 and 18.

When applied, poly foam adhesive is setting up in the semi cured stage to allow expansion over several hours to dry. To attach the tiles 10, 20, 40, and 60 to a roof substrate, the tiles' bottom flat wedge surface 13 is placed in direct contact with a substrate (not shown) coated with foam adhesive and tile body bottom recessed dome and grooves 12 are filled with foam adhesive that binds the tile rear surface 22 to the roof substrate. The poly foam adhesive is measurably applied into the tile dome recess and grooves 12 thus filling the empty recessed areas and rectangular grooves that increase contact areas to the tiles' foam core for analogous core to adhesive bonding for a weld-like bond.

After the tile dome 12 is measurably filled with poly foam adhesive and during the adhesive foam setup, the tile is to be flipped and positioned in place against the roof substrate. The foam adhesive continues to sets up and cures until the tile is firmly attached to the roof substrate. The rear surface recessed dome 12 could be 1.59cm (5/8 inch) deep, or sufficiendy deep to attach the tile to the substrate.

The tiles 10, 20, 40, 60 shown in Figures 1, 2, 4, 6 are the primary tiles used with the present invention and are used in all the areas on the roof except the very peaks and edges of the roof. All tiles shown in all Figures can be hand-sawed to change the length or to fit along the side edge if necessary. The R-value of the tiles shown 10, 20, 40, 60, 80 in Figures 1, 2, 4, 6, 8 is extremely high for insulation against heat and cold, extremely effective against thermal conduction and is also extremely lightweight because each tile is made of molded polyurethane foam like material.

Tile 40 shown in Figure 4, a tri-start tile shown as it would appear after molding from a polyurethane material preferably polymeric isocyanate and a water-based (HCFC-2455fa) blown component. The a tri-start tile 40 includes a large, thicker butt or face 21, which shows that tile 40 is used as the start row of roof tiles at the bottom edge of the roof. This bottom face 21 portion is twice as thick as the tile face portions 11 shown in Figures 1 and 2 can extend below the roof deck line but not beyond the roof's bottom side-edges as the last tile at the bottom of the roof. Tile 40 is configured differently than tiles 10 and 20 due to the placement of tile 40 at the bottom edge of the roof to provide an aesthetic shape and effective moisture run-off. Tile 40 shown also has reversed portions 15 and 16 plus edge 18. The tri- start tile 40 is made of and molded from the same material as the field tile 10 in Figure 1 and tile 20 in Figure 2 which is a polyurethane foam composition described above which is individually molded for each piece and is extremely lightweight. The tri-start tile 40 also provides an aesthetic look like a conventional clay, cement, slate or wood shake tiles as can all tiles that are mentioned in this preferred embodiment section.

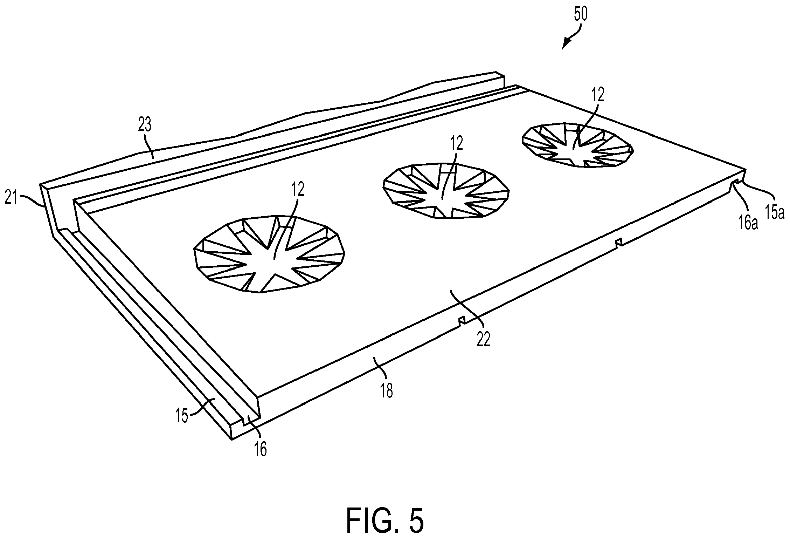

Tile 50 shown in Figure 5 is the underside perspective of Figure 4 shown as it would appear after molding from a polyurethane material preferably polymeric isocyanate and a water- based (HCFC-2455fa) blown component. The underside of a tri-start tile 50 includes the surface area 22 which shows the domed pattern 12 for receiving poly foam adhesive for attaching the start row roof tile 50 to the roof substrate. The tile overlap area 23 underside portion is a-typical of the wedged portion 13 shown in Figure 3 due to start- tiles are installed at the very bottom row and do not have other tiles to overlap in top-over-bottom fashion. The tile underside portion 23 is almost entirely filled in so to rest on the roof deck, however angled just a bit to allow room for metal drip-edge routinely installed under substrate at the bottom edge of the roof, so not to compromise the angle of the start- tiles in comparison to the angles of the installed tiles 10 and 20.

The tile 50 also includes the side edge return portion 15 that is used to create a gutterlike system with an adjacent tile having a reversed portion 16 so that the tiles inter band in a side-by-side row building block fashion. The rear surface 22 of the bottom roof tile is shown.

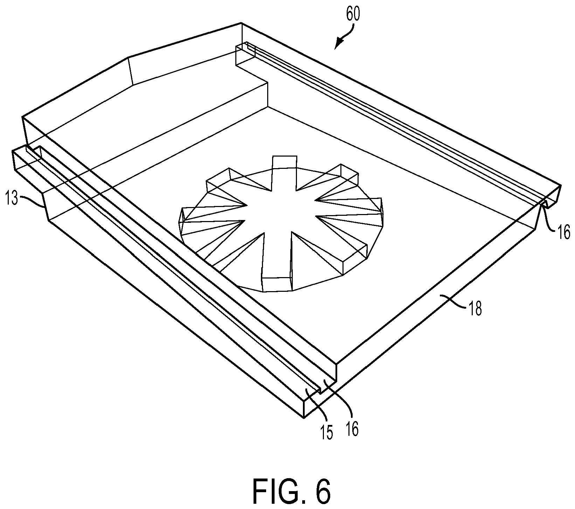

Tile 60 as shown in Figure 6 is a single-field tile as it would appear after molding from a polyurethane material, preferably polymeric isocyanate and a water-based (HCFC- 2455fa) blown component. The a single-field tile 60 includes a side edge return portion 15 and groove 16 that is used to create a gutter-like system for each field tile with an adjacent tile having a reversed portion 16a so that the tiles inter band in a side-by-side row building block fashion. The top end 18 is flat and butts against a wedged portion 13 shown in Figure 3. The face portion 11 shown in Figure 1 and 2 is the topside edge of the top-over-bottom overlap and positioned in brick- like fashion regarding tiles 10 and 20 and direcdy above tile 40 shown in Figure 4 shown within.

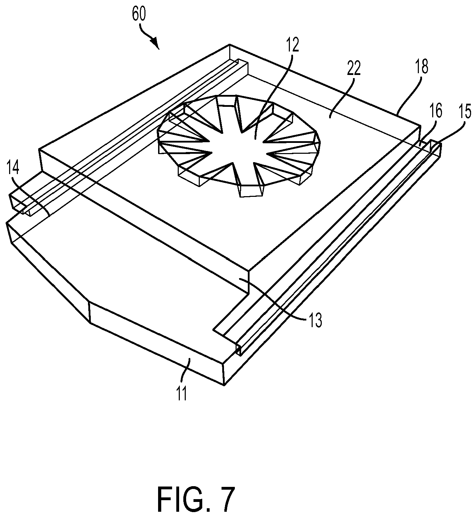

Tile 60 shown in Figure 7 shows the underside perspective of the tile 60 of Figure 6 shown as it would appear after molding from a polyurethane material preferably polymeric isocyanate and a water-based (HCFC-2455fa) blown component. The underside of a single-field tile 60 includes a dome like depression with rectangular probes/deviations expanding outward considerably increasing contact areas 12 that is sufficiently deep to receive foam adhesive (not shown) that is used to firmly attach tiles 10, 20, 40, 60 to a roof substrate. Also shown in Figure 7 a lower step-like portion 14 which is used to overlap the tile below the tile shown in Figures 1, 2, 4, 6 when a roof is done. Tile 60 shown also has same reversed portions 15 and 16 plus edge portions 11, 13 and 18.

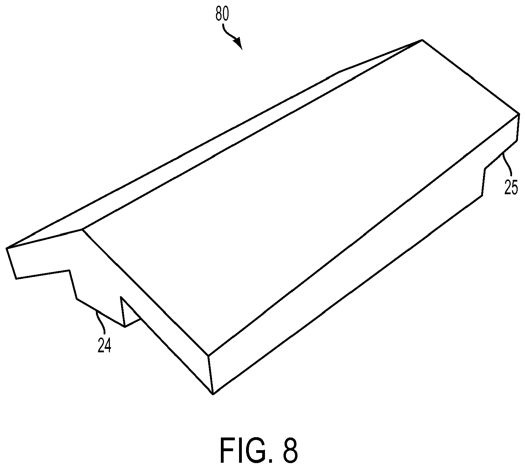

Referring now to Figure 8, the molded hip-and-ridge tile 80 (not covered by the present invention) shown as it would appear after molding from a polyurethane material, preferably polymeric isocyanate and a water-based (HCFC-2455fa) blown component. The hip-and-ridge tile 80 is shown which is used where the different field tiles meet and at the very top of the roof peak or ridge for covering and joining the upper row of field tiles at the peak of the roof. The ridge tile 80 is molded and made of the same material as all tiles Figures 1, 2, 4, 6 and is very light weight. Tile 80 can also be overlapped through recessed portion 25 at one end.

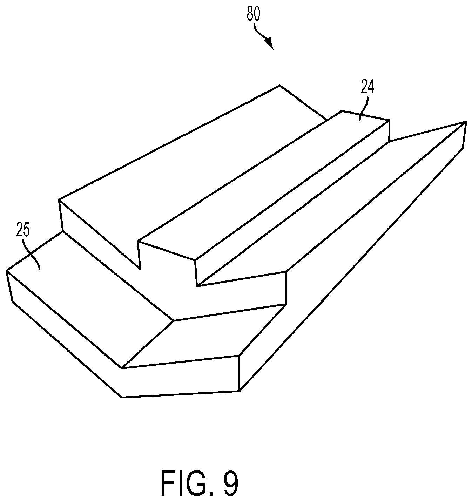

Tile 80 in Figure 9 (not covered by the present invention), shows the underside perspective of the tile 80 of Figure 8 shown as tile 80 would appear after molding from a polyurethane material preferably polymeric isocyanate and a water-based (HCFC-2455fa) blown component. The underside of a hip-and- ridge tile includes a flat bottom surface 24 of ridge can also receive adhesive foam along its bottom for attaching the tiles 10, 20, 40, 60 to the adjacent field tiles or hip for covering and joining the upper row of field tiles at intersections where slope of roof changes angles or direction. Tile 80 also shows the overlapped recessed portion 25 at one end.

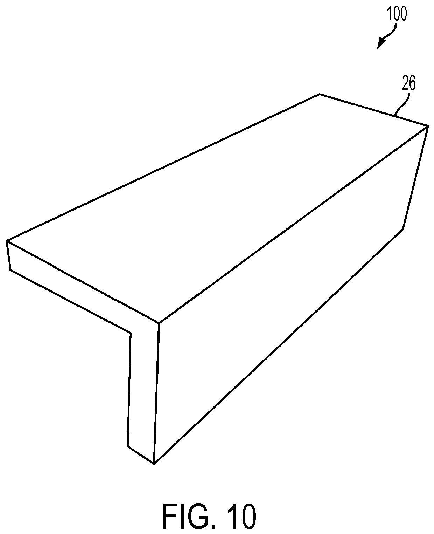

Referring now to Figure 10, the molded rake tile 100 (not covered by the present invention) shown as it would appear after molding from a polyurethane material, preferably polymeric isocyanate and a water-based (HCFC-2455fa) blown component. The rake tile 100 shown which is used where the different field tiles stop and at the edges or gable ends for covering the upper row of field tiles at the roof's periphery mainly for decorative trim effects. The rake tile 100 is molded and made of the same material as all tiles Figures 1, 2, 4, 6, 8 and is very light weight. Tile 100 can be overlapped without a recessed portion unlike other molded tiles but shows a thinner/smaller end 26 where overlap occurs.

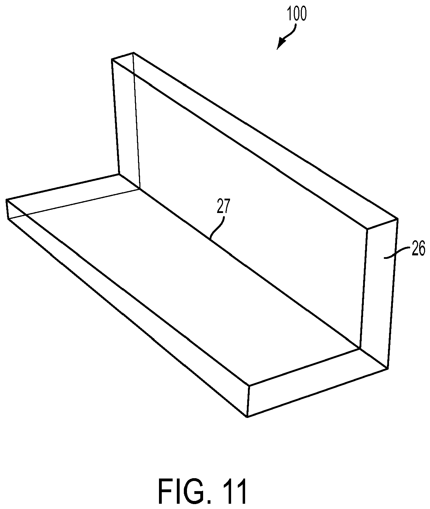

Tile 100 in Figure 11, shows the flat underside surface of rake tile 100 (not covered by the present invention) which can also receive adhesive foam along its inside corner 27 for attaching the tile 10, 20, 40, 60 to the adjacent field tiles or hip where different fields of tile stop and at the edges or gable ends for covering and trimming off the upper row of field tiles.

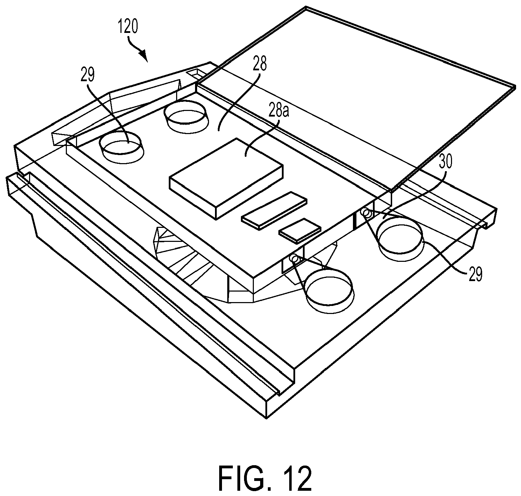

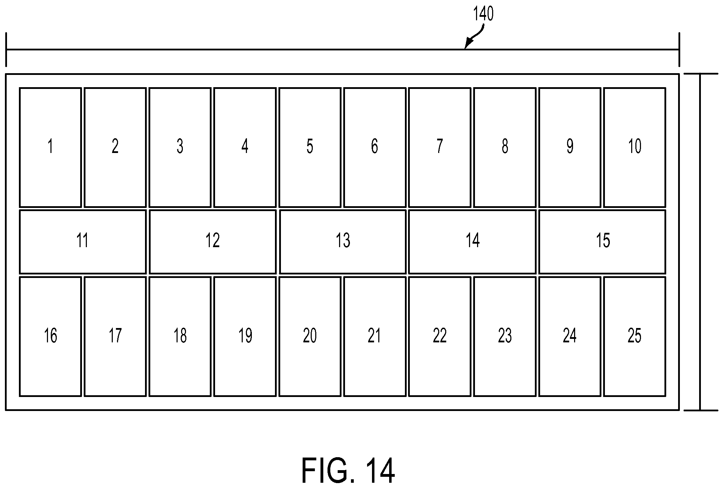

Tile 120 in Figure 12 shows a hollow tile container or tile which is used as a Junction-Box Tile (JT) 120 and installed between several tri-solar tiles (Figure 2) where the hollow area 28 can be used for receiving circuitry apparatus 28a and management. The tile 120 is designed to blend in with roof product type styles/lines and will provide protective, air cooled, vented, housing for ports 29, internal wiring blocks, mounts for incorporating extemporaneous devices to facilitate safe maintenance. Additional arrays of management capabilities are installed in JT 120-over-JT 120 in a bricklike fashion so to allow electrical connections to flow from JT 120-to- JT 120 through aligned passageways 30 located at the top-face and hollowed area that with sleeve-like attachment create a vertical throughway so a single point of entry for the electrical wiring into the attic space at the roof's peak, before installing the hip-and-ridge tile Figure 8. Roofers will easily match color-coded plugs and twist couplers on wire harnesses together where they safely await a qualified electrical contractor who will interface the system once he/she sets "Modules" 140 in Figure 14 in place on site into the tri-solar tile 20 Figure 2.

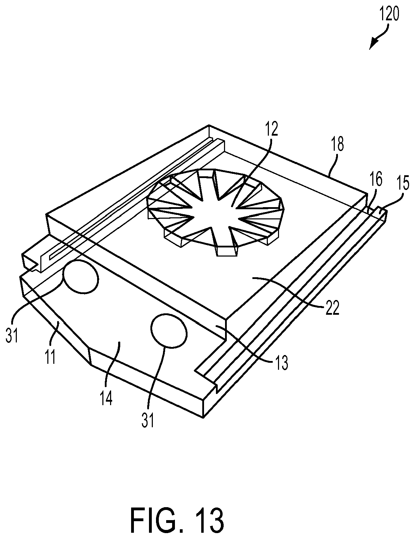

Tile 120 shown in Figure 13 shows underside of the hollow tile container or Junction- Box Tile (JT) 120 revealing the plugs 31 covering the aligned passageways 30 and the same dome like depression 12 with rectangular groove/deviations expanding outward thereby considerably increasing contact areas that is sufficiently deep to receive foam adhesive (not shown) that is used to firmly attach tiles 10, 20, 40, 60 to a roof substrate. Also shown in Figure 13 is a lower step-like portion 14 which is used to overlap the tile below the tile shown in Figures 1, 2, 4, 6 when a roof is done. Tile 120 shows also having the same reversed portions 15 and 16 plus edge portions 11, 13 and 18.

Solar Module 140 in Figure 14 shows a grouping of 25 solar cells spaced apart, that can be connected in series or parallel so to produce energy at today's rate of 1 kW per day per every 575 - 3"x 6" solar cells. This solar "Module" 140 can be reconfigured or manipulated to house whatever future technology has to offer and set in the tri- solar tile 20 Figure 2 (in factory or on site) as long as it bears a positive and negative lead plus a ground lead. The solar module 140 fits in the recess 19 in tile 20 in Figure 2. An entire roof can have tiles 20 with installed modules 140 in the field of the roof.

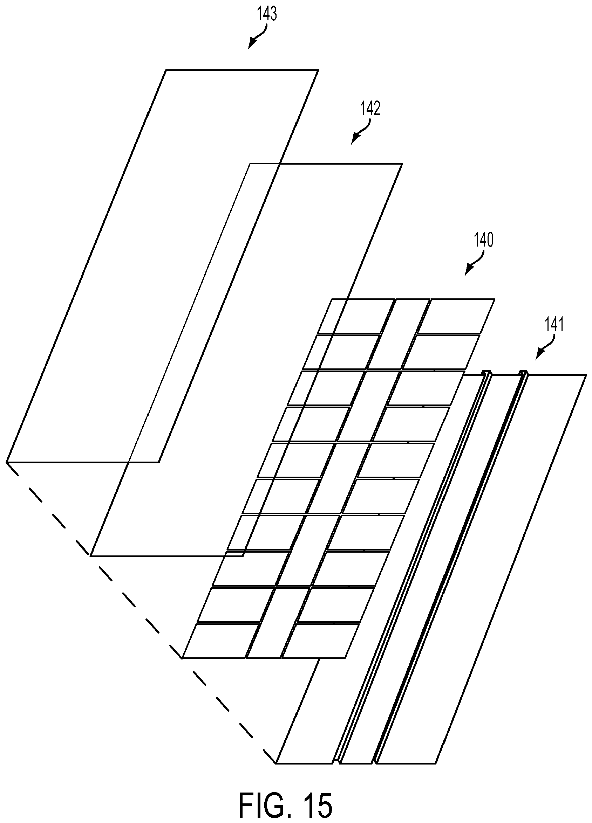

Figure 15 shows an exploded view of the solar "Module" 140 where solar cells can be placed on a base, encapsulated in spray technology or laminated to prevent moisture penetration, and possibly topped-off with protective tempered glass, collectively called the solar "Module" 140, and set in place by the electrician on site into the tri- solar tile 20 Figure 2 by connecting wire harnesses to "Modules" and then mechanically fasten "Modules" onto tiles and finally to the electrical grid and/or battery bank only after all roof tiles and wire harnesses have been installed by the roofer.

This solar "Module" 150 can be reconfigured or manipulated to house whatever future technology has to offer and set in the tri- solar tile 20 Figure 2 (in factory or on site) as long as the Module includes a positive and negative lead plus a ground lead.

Using the tri-field tile 10 Figure 1, the tri- solar tile 20 Figure 2 plus the solar "Module" 140 Figure 14, the tri-start tile 40 Figure 4, the single field tile 60 Figure 6, the hip- and-ridge tile 80 Figure 8, the rake tile 100 Figure 10, and the Junction-Box Tile 120 Figure 12, an entire roof structure with solar integration can be installed quickly and easily using pre- molded tile made of a very light weight material and foam adhesive which allows for quick setup and attachment to the roof structure.

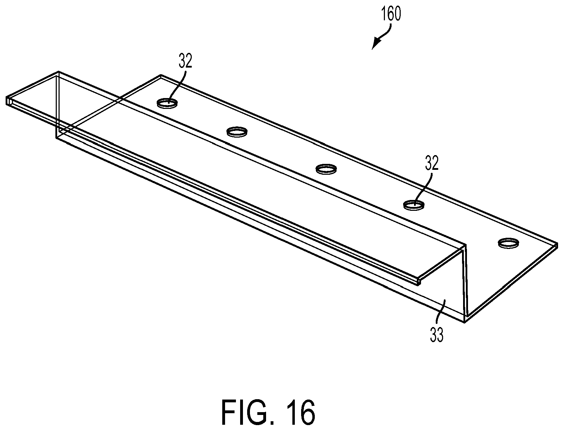

Tile 160 Figure 16 shows a "Z" shaped (in cross section) rigid metal track (not covered by the present invention) that can be of various lengths of 61cm (2 ft) or more that are positioned behind the tri-start tile 40 and mechanically fastened to the roof deck using roofing nails through holes 32 that are spaced 4" apart. "Z" tracks 160 are snuggled tight to the top tile end 18 and are positioned between the tile wedged portion 13 against the single field tile 60 or the tri-field tile 10 but never beyond the bottom row or tri-start tile 40. "Z" tracks 160 one fastened create a secure resting point 33 for all vertical remaining invention roof tiles to rest upon above the Z track without the concern for tile slippage resulting from non-curing adhesive foam or downward pressure from upper rows/levels of tiles that also may slip/slide from fresh/non-cured adhesive foam.

The most important feature of the improved polyurethane roof tile disclosed herein is its ability to provide a fire blocking barrier to a roof tile made of a polyurethane foam that is used on a sloped roof. Applicant has found that using an aliphatic poly material as an outer layer in combination with an intumescent non-halogenated phosphate inner layer, a fire blocking partition or barrier is formed over the polyurethane foam body of the tile allowing it to be used safely on sloping roofs. Under production, open tile mold cavities initially are robotically sprayed with a flexible byproduct mixture of a 100% solid Aliphatic polyurea material, Ultra Violet ray repellents and flame retardant/resistant additives yielding a durable top layer/surface coat that sets to tack in under 1 -minute. Secondly an intumescent mixture based on a non-halogenated phosphate yielding a unique 100% solid epoxy sub-layer/beneath surface coat that serves as the fire blocking partition and is also robotically sprayed and allowed to fully cure before closing the mold and injecting the polyurethane foam permitting all in-mold products to simultaneously bond. An example of the fire blocking partition materials that can be used is described in U.S. Patent No. 6, 773, 697 issued May 11, 2004. A specific product that can be used which is sold under the trademark Ceasefire Superior Epoxy is a two component epoxy fire retardant including an intumescent coating based on non-halogenated phosphate technology. This product is sold by New Line Safety LLC and has a DNC certificate number F-16685. Once the tile is removed from the mold, it is ready to be delivered and installed on any 3" on 12" or greater slope roof. The tile can also be correctly manufactured if the process were in reverse.

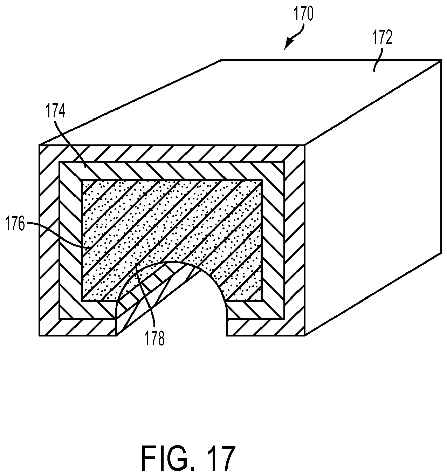

Figure 17 shows a tile 170 (not covered by the present invention) that includes an aliphatic outer layer 172 that may include ultraviolet ray protective materials and fire retardants and an inner layer 174 made of an intumescent mixture based on a non-halogenated phosphate. The inner layer 174 is coated on or attached during molding to the polyurethane foam tile body 176 which includes a bottom recessed portion 178 that does not have the inner or outer layer of fire retardant materials affixed thereto. The layers of the invention are shown with the outer/surface layer 172 are applied at 20- mills, the inner/sub-layer 174 applied at 20-mills, and the embodiment of the tile 176 at an average thickness of 5.7cm (2.25-inches) for handing and application durability.

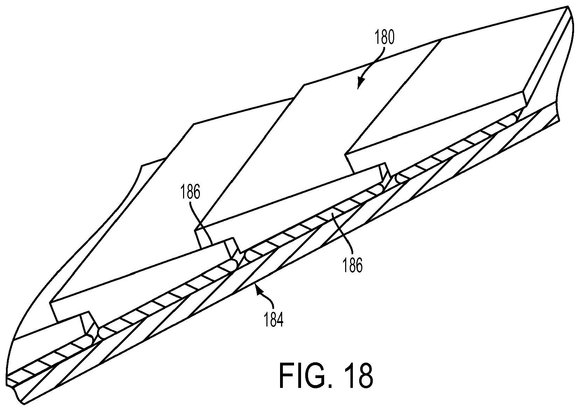

Figure 18 shows the array of roof tiles 180 overlapped with additional adhesive 186 being used to attach an overlapping tiles to the tile below it. Additional adhesive 186 is shown that attaches the roof tiles 182 a roof substrate 190.

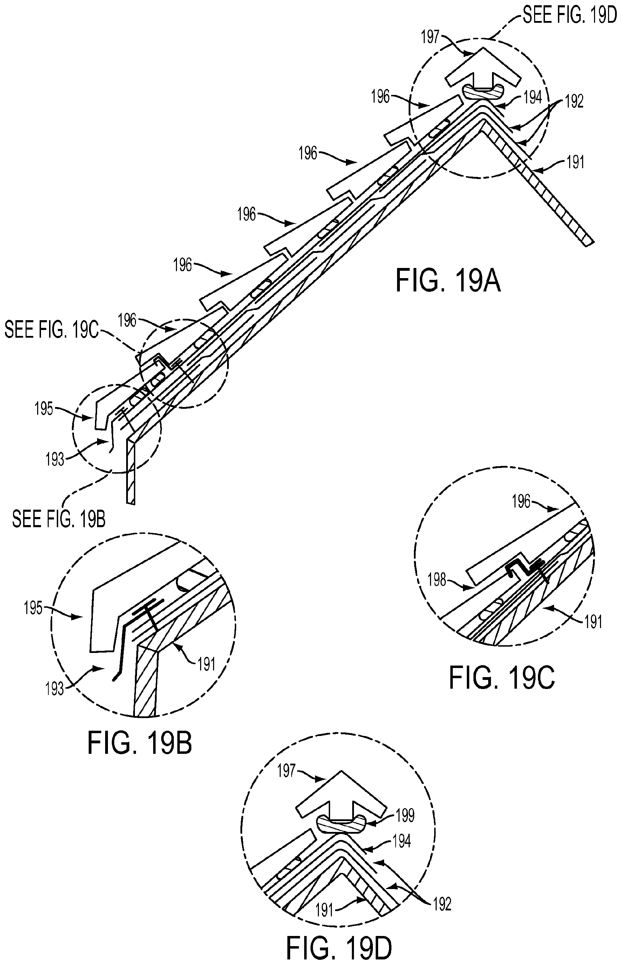

Figure 19A schematically shows an array of overlapped roof tiles 196 that represent field tiles described in the invention herein that are adhesively attached to decking 191 that also includes felt paper 192 and a granular substrate 194, all of which is attached to the decking 191. The array of tiles are attached to the granular substrate by adhesive foam. This view is a section of the roof from the lower edge of the roof to the peak of the roof. The adhesive foam to attach tiles 196 which are overlapped has been explained above. As shown, a drip edge 193 is included at the lower edge of the roof along with the start tile 195 that begins at the bottom of the roof. A ridge tile 197 is also placed at the very top or peak of the roof which is also attached by adhesive foam 199 as more clearly shown in Figure 19 D. Figure 19 B shows an enlarged view of the start tile 195 and the drip edge 193 as it is attached to the decking 191 at the very bottom edge of the roof. Figure 19 C which shows an enlarged view of a mid-portion of the roof with field tile 196 also includes a Z-track fastener 198 which is attached to support a column of field tiles 196 from moving downwardly and also attaches the start tile. Figure 19 D shows the ridge tile 197 attached by adhesive foam 199 to the granular substrate 194 covering the peak of the roof. Again felt paper is used 192 that's attached to the decking 191.

Traditional tile roof systems need frequent maintenance and leak after a short service time. The invention solves this problem in several ways as described above and is defined in the claims.

The instant invention has been shown and described herein in what is considered to be the most practical and preferred embodiment. It is recognized, however, that departures may be made there from within the scope of the claims and that obvious modifications will occur to a person skilled in the art.

## Claims

1. A roof tile (10, 20, 30, 40, 50, 60, 120, 196) comprising;
a tile body in the shape of a six-sided polyhedron, each side being mostly rectangular, said tile body constructed of polyurethane foam ; said tile body sides including a top surface (18), a bottom surface (11,21), a front surface, a rear surface (22), and first and second parallel side surfaces; said rear surface (22) having a flat area configured to contact a roof substrate, said rear surface (22) including a recessed area (12) of a predetermined dome shape that includes poly foam adhesive receiving grooves/channels that increase adhesive contact area in use; wherein said tile body has an outer layer of a fire resistant, aliphatic UV protective material on said top (18), front, parallel sides and bottom surface (11, 21), and a portion of said rear surface (22); said tile body having a fire blocking inner layer affixed beneath said outer layer of fire resistant, aliphatic UV protective material and to said rear surface (22) to form a fire blocking barrier; and in said tile body recessed area (12) of the rear surface (22) not having an outer layer of fire resistant aliphatic ultra-violet protective material and not having an inner layer of fire blocking material, thereby exposing the foam polyurethane composition, the core foam tile body, within the dome shaped recess area (12) of the roof tile for engagement with a poly foam adhesive to be used to attach the roof tile in brick like fashion to an acceptable roof substrate, **characterized in that** said outer layer is of fire resistant 100% solid aliphatic polyurea UV protective material and **in that** said fire blocking inner layer is of an intumescent mixture of a non-halogenated phosphate.

2. The roof tile as in Claim 1, wherein: the length of said tile (10, 20, 30, 40, 50, 60, 120, 196) is approximately 3 times longer than a standard sized roof tile of 30.5cm (12 inches) wide.

3. The roof tile as in Claim 1, including a gel coat layer.

4. The roof tile as in Claim 1 including: said roof tile (20) having a substantial front surface that includes an upper recessed area (19) sized in length, width, and depth configured to receive a removable and upgradable solar "module" attachable to the front surface of said roof tile and having solar photovoltaic cells for generating electricity, to fit in the recessed area (19) of the front surface of said roof tile.

5. A roof tile as in claim 1, comprising:
at least one specialized roof tile configured to include solar cell electrical junction components for regulating an array of power/electricity generating cells.

6. A light-weight roof tile (10, 20, 30, 40, 50, 60, 120, 196) usable with an array of identical tiles to cover the exterior roof substrate of a building comprising:
a roof tile body shaped to form a polyhedron constructed from a closed cell lightweight polyurethane foam in a predetermined shape that includes a top surface (18), a bottom surface (11, 21), a front surface, a rear surface (22), and first and second parallel side surfaces;
a foam adhesive applied to said rear surface (22) of said roof tile body that is useful for permanently attaching said roof tile body to an exterior roof substrate of a building;
said rear surface (22) including a flat surface portion for contact with a building exterior roof substrate and a recessed area portion (12) for receiving said foam adhesive, said recessed area (12) of the rear surface (22) having a predetermined shape and size to increase the effective foam adhesive attachment area by at least 20% of the roof tile flat rear surface area that receives foam adhesive increasing the attachment strength of said roof tile body to an exterior roof substrate; wherein the roof tile body further includes:
an outer fire resistant aliphatic material layer; and an inner fire blocking layer attached to said outer layer fire retardant layer and said top surface (18), said portions of rear surface (22), said front surface, said bottom surface (11, 21) and said first and second parallel side surfaces of said polyurethane foam tile body, **characterized in that** the inner fire blocking layer is made of a 100% solid intumescent mixture that includes non-halogenated phosphate.

7. A roof tile as in claim 6, wherein:
said recessed area (12) of said rear surface (22) is centrally located relative to the roof tile rear surface (22) and the roof tile front, bottom and side surfaces.

8. A roof tile as in claim 6, including:
said roof tile body including a fire resistant 100% solid aliphatic polyurea ultra-violet (U.V.) layer of material on said outer surface, said front and bottom surfaces , and said first and second side surfaces, and the flat area of said rear surface (22).

9. A roof tile as in claim 6, including:
a fire blocking layer of material positioned on said roof tile body beneath said roof tile body fire resistant U.V. layer of material, said recessed area (12) of the rear surface (22) not having any fire resistant or fire blocking layers thereupon to enhance the attachment properties of said foam adhesive to the recessed area (12) in said rear surface (22).

10. A roof tile as in claim 6, wherein:
said roof tile body is constructed from 1.36Kg (31b) and denser different foam components for light weight and strength and thermal insulation properties.

11. A roof tile as in claim 6, wherein:
said roof tile body is constructed from polymeric isocyanate and water-based HCFC-2 4 5 5 blown.

## Patentansprüche

1. Dachplatte (10, 20, 30, 40, 50, 60, 120, 196), umfassend:
einen Plattenkörper in der Form eines sechsseitigen Polyeders, wobei jede Seite weitgehend rechteckig ist, wobei der genannte Plattenkörper aus Polyurethanschaumstoff hergestellt ist; wobei die genannten Plattenkörperseiten eine Oberseite (18), eine Unterseite (11, 21), eine Vorderseite, eine Rückseite (22) und eine erste und eine zweite, parallele seitliche Seite aufweisen;
wobei die genannte Rückseite (22) einen flachen Bereich aufweist, der für Kontakt mit einer Dachunterlage gestaltet ist, wobei die genannte Rückseite (22) einen ausgesparten Bereich (12) mit einer vorbestimmten Kuppelform aufweist, die Polyschaumklebstoff-Aufnahmenuten/-rillen aufweist, Gebrauch die Klebstoffkontaktfläche vergrößern; wobei
der genannte Plattenkörper eine Außenschicht aus einem feuerbeständigen aliphatischen UV-Schutzmaterial auf der bzw. den genannten Ober- (18), Vorder-, parallelen seitlichen Seiten und Unterseite (11, 21) und einem Teil der genannten Rückseite (22) aufweist;
wobei der genannte Plattenkörper eine feuerhemmende Innenschicht aufweist, die unter der genannten Außenschicht aus feuerbeständigem aliphatischem UV-Schutzmaterial und an der genannten Rückseite (22) befestigt ist, um eine feuerhemmende Barriere zu bilden;
und wobei der genannte ausgesparte Bereich (12) des Plattenkörpers der Rückseite (22) keine Außenschicht aus feuerbeständigem aliphatischem Ultraviolett-Schutzmaterial hat und keine Innenschicht aus feuerhemmendem Material hat, wodurch die Schaumpolyurethanzusammensetzung, der Kemschaumplattenkörper, in dem kuppelförmigen Aussparungsbereich (12) der Dachplatte für Eingriff mit einem Polyschaumstoff-Klebstoff freigelegt ist, der zum Anfügen der Dachplatte auf bausteinartige Weise an eine akzeptable Dachunterlage zu verwenden ist, **dadurch gekennzeichnet, dass** die genannte Außenschicht aus feuerbeständigem 100 % festem aliphatischem Polyurea-UV-Schutzmaterial ist und dass die genannte feuerhemmende Innenschicht ein intumeszentes Gemisch aus einem nicht halogenierten Phosphat ist.

2. Dachplatte nach Anspruch 1, wobei die Länge der genannten Platte (10, 20, 30, 40, 50, 60, 120, 196) etwa dreimal länger als ein normalgroßer Dachziegel mit einer Breite von 30,5 cm (12 Zoll) ist.

3. Dachplatte nach Anspruch 1 mit einer Gelcoat-Schicht.

4. Dachplatte nach Anspruch 1, die Folgendes aufweist: die genannte Dachplatte (20), die eine beträchtliche Vorderseite hat, die einen in Länge, Breite und Stärke bemessenen oberen ausgesparten Bereich (19) aufweist, der zur Aufnahme eines abnehmbaren und aufrüstbaren Solar-"Moduls" gestaltet ist, das an der Vorderseite der genannten Dachplatte anbringbar ist und photovoltaische Solarzellen zur Erzeugung von Elektrizität zum Einbau im ausgesparten Bereich (19) der Vorderseite der genannten Dachplatte hat.

5. Dachplatte nach Anspruch 1, umfassend
wenigstens eine Spezialdachplatte, die so gestaltet ist, dass sie elektrische Solarzellen-Anschlussbauteile zum Regeln einer Anordnung von Energie-/Elektrizitätserzeugungszellen aufweist.

6. Leichte Dachplatte (10, 20, 30, 40, 50, 60, 120, 196), die mit einer Anordnung identischer Platten zum Decken der äußeren Dachunterlage eines Gebäudes verwendbar ist, umfassend:
einen Dachplattenkörper, der zum Bilden eines Polyeders gestaltet ist, der aus einem geschlossenporigen leichten Polyurethanschaumstoff in einer vorbestimmten Form hergestellt ist, die eine Oberseite (18), eine Unterseite (11, 21), eine Vorderseite, eine Rückseite (22) und eine erste und eine zweite, parallele seitliche Seite aufweist;
einen Schaumklebstoff, auf die genannte Rückseite (22) des genannten Dachplattenkörpers aufgetragen, der zum dauerhaften Anfügen des genannten Dachplattenkörpers an eine äußere Dachunterlage eines Gebäudes nützlich ist;
wobei die genannte Rückseite (22) einen flachen Oberflächenteil für Kontakt mit einer äußeren Dachunterlage eines Gebäudes und einen Teil mit ausgespartem Bereich (12) zum Aufnehmen des genannten Schaumklebstoffs aufweist, wobei der genannte ausgesparte Bereich (12) der Rückseite (22) eine vorbestimmte Form und Größe hat, um den wirksamen Schaumklebstoffanfügungsbereich um wenigstens 20 % des flachen Rückseitenbereichs der Dachplatte zu vergrößern, der Schaumklebstoff aufnimmt, so dass die Anfügungsstärke des genannten Dachplattenkörpers an einer äußeren Dachunterlage vergrößert wird, wobei der Dachplattenkörper ferner Folgendes aufweist:
eine äußere feuerbeständige aliphatische Materialschicht und eine feuerhemmende Innenschicht, die an der genannten feuerbeständigen Schicht der Außenschicht und der genannten Oberseite (18), den genannten Teilen der Rückseite (22), der genannten Vorderseite, der genannten Unterseite (11, 21) und der genannten ersten und zweiten, parallelen seitlichen Seiten des genannten Polyurethanschaumstoff-Plattenkörpers angebracht ist, **dadurch gekennzeichnet, dass** die feuerhemmende Innenschicht aus einem 100 % festen intumeszenten Gemisch hergestellt ist, das ein nicht halogeniertes Phosphat aufweist.

7. Dachplatte nach Anspruch 6, wobei:
der genannte ausgesparte Bereich (12) der genannten Rückseite (22) relativ zur Rückseite (22) der Dachplatte und der Vorder-, Unter- und seitlichen Seite(n) der Dachplatte mittig positioniert ist.

8. Dachplatte nach Anspruch 6, die Folgendes aufweist:
den genannten Dachplattenkörper, der eine feuerbeständige 100 % feste aliphatische Polyurea-Ultraviolett- (UV) -Materialschicht auf der genannten Außenfläche, der genannten ersten und zweiten seitlichen Seite und dem flachen Bereich der genannten Rückseite (22) aufweist.

9. Dachplatte nach Anspruch 6, die Folgendes aufweist:
eine feuerhemmenden Materialschicht, die auf dem genannten Dachplattenkörper unter der genannten feuerbeständigen UV-Materialschicht des genannten Plattenkörpers positioniert ist, wobei der genannte ausgesparte Bereich (12) der Rückseite (22) keine feuerbeständigen oder feuerhemmenden Schichten auf ihm hat, um die Anfügungseigenschaften des genannten Schaumklebstoffs an dem ausgesparten Bereichs (12) in der genannten Rückseite (22) zu verbessern.

10. Dachplatte nach Anspruch 6, wobei:
der genannte Dachplattenkörper aus verschiedenen Schaumstoffkomponenten mit einer Dichte von 1,36 kg (3 lb) oder mehr für leichtes Gewicht und Festigkeits- und Wärmedämmungseigenschaften hergestellt ist.

11. Dachplatte nach Anspruch 6, wobei:
der genannte Dachplattenkörper aus polymerem Isocyanat und geblasenem HCFC-2455 auf Wasserbasis hergestellt ist.

## Revendications

1. Tuile de toit (10, 20, 30, 40, 50, 60, 120, 196) comprenant ;
un corps de tuile sous la forme d'un polyèdre à six côtés, chaque côté étant principalement rectangulaire, ledit corps de tuile étant construit en mousse de polyuréthanne ; lesdits côtés de corps de tuile incluant une surface de dessus (18), une surface de dessous (11, 21), une surface avant, une surface arrière (22), et des première et deuxième surfaces latérales parallèles ;
ladite surface arrière (22) ayant une zone plate configurée pour se mettre au contact d'un substrat de toit, ladite surface arrière (22) incluant une zone en retrait (12) ayant une forme en dôme prédéterminée qui inclut des rainures/gorges de réception d'adhésif pour mousse poly qui augmentent une zone de contact pour l'adhésif lors de l'utilisation ; dans lequel
ledit corps de tuile a une couche externe en un matériau aliphatique à protection contre les UV résistant au feu sur lesdits côtés de dessus (18), avant, parallèles et la surface de dessous (11, 21), et une portion de ladite surface arrière (22) ;
ledit corps de tuile ayant une couche interne retardatrice de flamme fixée sous ladite couche externe de matériau aliphatique à protection contre les UV résistant au feu et sur ladite surface arrière (22) afin de former une barrière retardatrice de flamme ;
et ladite zone en retrait du corps de tuile (12) de la surface arrière (22) n'a pas de couche externe de matériau aliphatique à protection contre les ultra-violets résistant au feu et n'a pas une couche interne de matériau retardateur de flamme, ce qui expose ainsi la composition de mousse de polyuréthanne, le corps de tuile à mousse centrale, au sein de la zone en retrait en forme de dôme (12) de la tuile de toit pour une mise en prise avec un adhésif de mousse poly devant être utilisé pour attacher la tuile de toit suivant une manière similaire à une brique sur un substrat de toit acceptable, **caractérisée en ce que** ladite couche externe est en un matériau polyurée aliphatique 100 % solide à protection contre les UV résistant au feu et **en ce que** ladite couche interne retardatrice de flamme est constituée d'un mélange intumescent en phosphate non halogéné.

2. Tuile de toit telle que dans la revendication 1, dans laquelle : la longueur de ladite tuile (10, 20, 30, 40, 50, 60, 120, 196) est environ 3 fois plus longue qu'une tuile de toit de dimension standard ayant 30,5 cm (12 pouces) de large.

3. Tuile de toit telle que dans la revendication 1, incluant une couche d'enduit gélifié.

4. Tuile de toit telle que dans la revendication 1 incluant : ladite tuile de toit (20) ayant une surface avant substantielle qui inclut une zone en retrait supérieure (19) dimensionnée en longueur, largeur, et profondeur configurée pour recevoir un « module » solaire détachable et évolutif apte à être attaché à la surface avant de ladite tuile de toit et ayant des cellules photovoltaïques solaires pour générer de l'électricité, devant se loger dans la zone en retrait (19) de la surface avant de ladite tuile de toit.

5. Tuile de toit telle que dans la revendication 1, comprenant :
au moins une tuile de toit spéciale configurée pour inclure des composants de jonction électrique de cellules solaires pour réguler une série de cellules génératrices d'électricité/d'énergie.

6. Tuile de toit légère (10, 20, 30, 40, 50, 60, 120, 196) utilisable avec une série de tuiles identiques pour couvrir le substrat de toit extérieur d'un bâtiment comprenant :
un corps de tuile de toit façonné pour former un polyèdre construit à partir d'une mousse de polyuréthanne légère à cellules fermées suivant une forme prédéterminée qui inclut une surface de dessus (18), une surface de dessous (11, 21), une surface avant, une surface arrière (22), et des première et deuxième surfaces latérales parallèles ;
un adhésif de mousse appliqué à ladite surface arrière (22) dudit corps de tuile de toit qui est utile pour attacher de manière permanente ledit corps de tuile de toit à un substrat de toit extérieur d'un bâtiment ;
ladite surface arrière (22) incluant une portion de surface plate pour se mettre en contact avec un substrat de toit extérieur de bâtiment et une portion de zone en retrait (12) pour recevoir ledit adhésif de mousse, ladite zone en retrait (12) de la surface arrière (22) ayant une forme et dimension prédéterminées afin d'accroître la zone de fixation d'adhésif de mousse efficace d'au moins 20 % de la zone de surface arrière plate de la tuile de toit qui reçoit l'adhésif de mousse, ce qui accroît la robustesse de fixation dudit corps de tuile de toit par rapport à un substrat de toit extérieur ; dans laquelle
le corps de tuile de toit inclut en outre :
une couche externe de matériau aliphatique résistant au feu ; et une couche interne retardatrice de flamme attachée à ladite couche externe de la couche ignifuge et à ladite surface de dessus (18), auxdites portions de surface arrière (22), à ladite surface avant, à ladite surface de dessous (11, 21) et auxdites première et deuxième surfaces latérales parallèles dudit corps de tuile à mousse de polyuréthanne, **caractérisée en ce que** la couche interne retardatrice de flamme est réalisée en un mélange intumescent 100 % solide qui inclut un phosphate non halogéné.

7. Tuile de toit telle que dans la revendication 6, dans laquelle :
ladite zone en retrait (12) de ladite surface arrière (22) est localisée centralement relativement à la surface arrière de tuile de toit (22), et aux surfaces avant, de dessous et latérales de tuile de toit.

8. Tuile de toit telle que dans la revendication 6, incluant :
ledit corps de tuile de toit incluant une couche de matériau polyurée aliphatique 100 % solide contre les ultra-violets (UV) résistant au feu sur ladite surface externe, lesdites surfaces avant et de dessous, et lesdites première et deuxième surfaces latérales, et la zone plate de ladite surface arrière (22).

9. Tuile de toit telle que dans la revendication 6, incluant :
une couche de matériau retardateur de flamme positionnée sur ledit corps de tuile de toit sous ladite couche de matériau résistant au feu et aux UV du corps de tuile de toit, ladite zone en retrait (12) de la surface arrière (22) n'ayant sur celle-ci aucune couche résistante au feu ou retardatrice de flamme pour accroître les propriétés de fixation dudit adhésif de mousse sur la zone en retrait (12) dans ladite surface arrière (22).

10. Tuile de toit telle que dans la revendication 6, dans laquelle :
ledit corps de tuile de toit est construit à partir de composants de mousse différents plus denses de 1,36 kg (31 livres) pour procurer des propriétés de légèreté et de résistance et d'isolation thermique.

11. Tuile de toit telle que dans la revendication 6, dans laquelle :
ledit corps de tuile de toit est construit à partir d'une substance isocyanate polymère et de composants soufflés selon la norme HCFC-2 4 5 5 à base aqueuse.
